# EUROPEAN PATENT APPLICATION

(11) **EP 3 085 958 A1**
(43) Date of publication of application: **26.10.2016**
(21) Application number: 16165427.2
(22) Date of filing: 14.04.2016
(51) Int. Cl.: F03D 80/80

(54) **A SYSTEM FOR INSTALLING A CABLE IN A TOWER OF A WIND TURBINE AND METHOD THEREFOR**

(30) Priority: 21.04.2015 US 201514691724
(71) Applicant: General Electric Company, Schenectady, NY 12345 (US)
(72) Inventor: LANGEL, Andre, 48499 DE Salzbergen (DE)
(74) Representative: Bedford, Grant Richard

(57) **Abstract**

A system for installing an electric cable 102 in a tower 12of a wind turbine 10 is provided. This system comprises at least one cable drum 120 designed for carrying and controlled releasing of at least one electric cable 102 for a wind turbine 10. Further, the system contains a drum support 114 for rotatably supporting said at least one cable 102 drum, wherein the drum support 114 is configured to be mounted within an interior of a segment of the tower 12.

## Description

The subject matter described herein relates generally to methods and systems for wind turbines, and more particularly, to methods and systems concerning cables in a tower of a wind turbine.

At least some known wind turbines include a tower and a nacelle mounted on the tower. A rotor is rotatably mounted to the nacelle and is coupled to a generator by a shaft. A plurality of blades extend from the rotor. The blades are oriented such that wind passing over the blades turns the rotor and rotates the shaft, thereby driving the generator to generate electricity.

Typically, wind turbines are transported to the site of their installation in a plurality of parts and then assembled on site. The transport may occur via transport vehicles or vessels over land (e.g. road and rail) and by sea. The wind turbines may then be erected at their destination in onshore or offshore locations using the transport vehicle or vessel or by employing further heavy machinery, which is designed to lift large and heavy objects.

The tower of the wind turbine usually is assembled from various segments at the designated site after a foundation is formed. The single parts of the tower are brought to the site separately or preassembled. Further, the tower provides a support for cables electrically connecting the nacelle and its components with further electrical components at ground level.

Each part of the tower may come with preinstalled cabling comprising a plurality of cable sections, which need to be connected in order to establish an electrical connection. Typically, this step is performed by specially trained staff during or after the erection of the wind turbine. Said cable connections may be later a potential subject for failures.

Wind turbine manufacturers and wind farm operators may desire a reduction of the failure risk of the electrical cable connections in the wind turbine tower.

It would therefore be desirable to provide systems and methods allowing a more reliable structure of the cabling in a tower of a wind turbine.

In one aspect according to the present invention, a system for installing an electric cable in a tower of a wind turbine is provided. This system comprises at least one cable drum designed for carrying and controlled releasing of at least one electric cable for a wind turbine. Further, the system contains a drum support for rotatably supporting said at least one cable drum, wherein the drum support is configured to be mounted within an interior of a segment of the tower.

In another aspect, a segment for a tower of a wind turbine is provided. Said segment comprises a longitudinal axis, a lateral wall surrounding the axis and or a plurality of support beams arranged partially parallel to the axis, a platform mounted therein between mainly perpendicular to the longitudinal axis for receiving wind turbine related personal and equipment and a system for installing an electric cable in the tower of a wind turbine, said system comprises at least one cable drum designed for carrying and controlled releasing of at least one electric cable for a wind turbine and a drum support for rotatably supporting said at least one cable drum, wherein the drum support is mounted within an interior of the segment.

In yet another aspect, a method for installing an electric cable to a tower of a wind turbine is provided, the method comprising the following steps: (a) providing a system for installing the electrical cable within an interior of the at least one tower segment; (b) mounting a drum support for rotatably supporting at least one cable drum to the interior of the at least one tower segment; (c) mounting at least one cable drum carrying at least one electric cable for a wind turbine to the drum support; (d) erecting the tower including lifting the at least one tower segment; (e) unwinding the electric cable essentially parallel to the longitudinal axis through an opening in or near the platform; (f) fixing the cable in respect to the segment; (g) optionally repeating steps e) to f).

In an additional other aspect, a cable drum adapted for use in a system for installing an electric cable in a tower of a wind turbine is provided, wherein the system comprises a drum support for rotatably supporting the cable drum and the drum support is configured to be mounted within an interior of a segment of the tower, the cable drum comprises at least one electric cable for a wind turbine having a weight of more than 100 kilograms and a length of more than 60 meters, and the cable drum is designed for carrying and controlled releasing of said cable

Various aspects, advantages and features of the present invention are apparent from the dependent claims, the description and the accompanying drawings, in which:
Figure 1 is a perspective view of an exemplary wind turbine.
Figure 2 is an enlarged sectional view of a portion of the wind turbine shown in Figure 1.
Figure 3 is an exploded view of a system for installing an electrical cable.
Figure 4 is a perspective view of a disassembled cable drum of the system shown in Figure 3.
Figure 5 is a perspective view of an embodiment of a cable drum for a system for installing a cable.
Figure 6 is a perspective view into a segment of a tower of a wind turbine according to a first embodiment comprising a system for installing an electrical cable.
Figure 7 is a sectional view of the segment according to the first embodiment.
Figure 8 is a perspective view in a segment of a tower of a wind turbine according to a second embodiment comprising a system for installing an electrical cable.
Figure 9 is a sectional view of the segment according to the second embodiment.
Figure 10 is a perspective view in the segment according to the first embodiment comprising a saddle for supporting electrical cables.
Figure 11 is a perspective view in the segment according to the second embodiment comprising a saddle for supporting electrical cables.

Reference will now be made in detail to the various embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

The embodiments described herein include a system for installing an electric cable in a tower of a wind turbine, a cable drum adapted for use in said system, a segment for a tower of a wind turbine and a method for installing an electric cable to said tower, wherein an electrical connection comprising a cable for said tower is provided, which has improved fail-safe characteristics. More specifically, it is not required anymore to assemble the electrical connection by connecting a plurality of various cable segments via a plurality of connection devices. This leads to a reduction of components prone to failure and subsequently to an increased reliability of the electrical connection. Thus, no maintenance work therefor is required and a related downtime of operation of the wind turbine is avoided. In addition, due to shortened installation time and effort and less components assembled an overall cost reduction is achieved.

As used herein, the term "wind turbine" is intended to be representative of any device that generates rotational energy from wind energy, and more specifically, converts kinetic energy of wind into mechanical energy.

As used herein, the term "wind generator" is intended to be representative of any wind turbine that generates electrical power from rotational energy generated from wind energy, and more specifically, converts mechanical energy converted from kinetic energy of wind to electrical power.

As used herein, the term "tower of a wind turbine" is intended to be representative of any support structure of a wind turbine that is adapted to carry a nacelle of a wind turbine.

As used herein, the term "segment" of a tower of a wind turbine is intended to be representative of any structural component which forms at least one structural part of the tower of the wind turbine. The tower may comprise a plurality or only one of such segments. Said segment can be a steel wall surrounding a longitudinal axis or a lattice structure wherein lattice beams are arranged to function as a longitudinal lattice segment.

As used herein, the term "interior" of a segment is intended to be representative of any space within the structure of the segment while the outer limits of such space may be for real or of imaginary nature formed by said structure of the segment. For example, a space within the upper mentioned steel wall or a space surrounded by lattice beams without separate walls is considered as interior of a segment.

As used herein, the term "cable drum" is intended to be representative of any structure designed for carrying a cable in any manner, independently from the way a cable is arranged or attached to this structure.

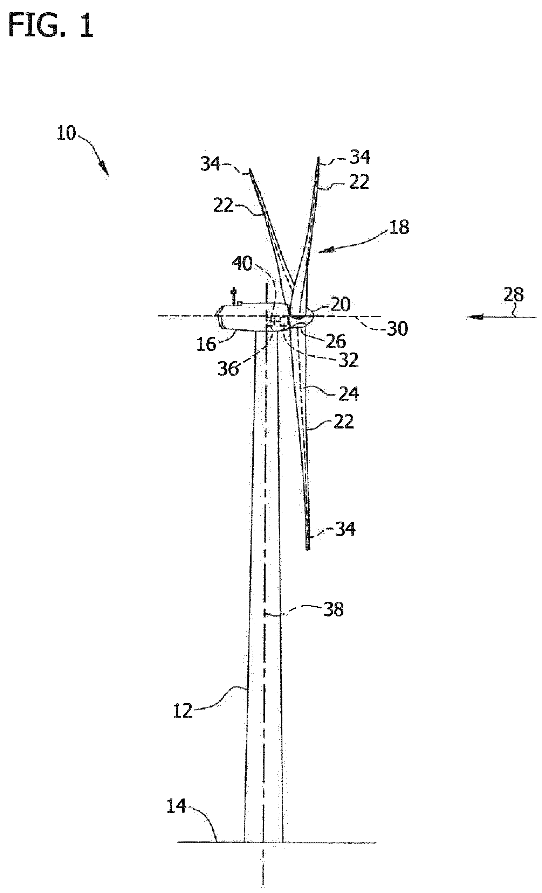

Figure 1 is a perspective view of an exemplary wind turbine 10. In the exemplary embodiment, wind turbine 10 is a horizontal-axis wind turbine. Alternatively, wind turbine 10 may be a vertical-axis wind turbine. In the exemplary embodiment, wind turbine 10 includes a tower 12 that extends from a support system 14, a nacelle 16 mounted on tower 12, and a rotor 18 that is coupled to nacelle 16. Rotor 18 includes a rotatable hub 20 and at least one rotor blade 22 coupled to and extending outward from hub 20. In the exemplary embodiment, rotor 18 has three rotor blades 22. In an alternative embodiment, rotor 18 includes more or less than three rotor blades 22. In the exemplary embodiment, tower 12 is fabricated from tubular steel to define a cavity (not shown in Figure 1) between support system 14 and nacelle 16. In an alternative embodiment, tower 12 is any suitable type of tower having any suitable height.

Rotor blades 22 are spaced about hub 20 to facilitate rotating rotor 18 to enable kinetic energy to be transferred from the wind into usable mechanical energy, and subsequently, electrical energy. Rotor blades 22 are mated to hub 20 by coupling a blade root portion 24 to hub 20 at a plurality of load transfer regions 26. Load transfer regions 26 have a hub load transfer region and a blade load transfer region (both not shown in Figure 1). Loads induced to rotor blades 22 are transferred to hub 20 via load transfer regions 26.

In one embodiment, rotor blades 22 have a length ranging from about 15 meters (m) to about 91 m. Alternatively, rotor blades 22 may have any suitable length that enables wind turbine 10 to function as described herein. For example, other non-limiting examples of blade lengths include 10 m or less, 20 m, 37 m, or a length that is greater than 91 m. As wind strikes rotor blades 22 from a direction 28, rotor 18 is rotated about an axis of rotation 30. As rotor blades 22 are rotated and subjected to centrifugal forces, rotor blades 22 are also subjected to various forces and moments. As such, rotor blades 22 may deflect and/or rotate from a neutral, or non-deflected, position to a deflected position.

Moreover, a pitch angle or blade pitch of rotor blades 22, i.e., an angle that determines a perspective of rotor blades 22 with respect to direction 28 of the wind, may be changed by a pitch adjustment system 32 to control the load and power generated by wind turbine 10 by adjusting an angular position of at least one rotor blade 22 relative to wind vectors. Pitch axes 34 for rotor blades 22 are shown. During operation of wind turbine 10, pitch adjustment system 32 may change a blade pitch of rotor blades 22 such that rotor blades 22 are moved to a feathered position, such that the perspective of at least one rotor blade 22 relative to wind vectors provides a minimal surface area of rotor blade 22 to be oriented towards the wind vectors, which facilitates reducing a rotational speed of rotor 18 and/or facilitates a stall of rotor 18.

In the exemplary embodiment, a blade pitch of each rotor blade 22 is controlled individually by a control system 36. Alternatively, the blade pitch for all rotor blades 22 may be controlled simultaneously by control system 36. Further, in the exemplary embodiment, as direction 28 changes, a yaw direction of nacelle 16 may be controlled about a yaw axis 38 to position rotor blades 22 with respect to direction 28.

In the exemplary embodiment, control system 36 is shown as being centralized within nacelle 16, however, control system 36 may be a distributed system throughout wind turbine 10, on support system 14, within a wind farm, and/or at a remote control center. Control system 36 includes a processor 40 configured to perform the methods and/or steps described herein. Further, many of the other components described herein include a processor. As used herein, the term "processor" is not limited to integrated circuits referred to in the art as a computer, but broadly refers to a controller, a microcontroller, a microcomputer, a programmable logic controller (PLC), an application specific integrated circuit, and other programmable circuits, and these terms are used interchangeably herein. It should be understood that a processor and/or a control system can also include memory, input channels, and/or output channels.

In the embodiments described herein, memory may include, without limitation, a computer-readable medium, such as a random access memory (RAM), and a computer-readable non-volatile medium, such as flash memory. Alternatively, a floppy disk, a compact disc-read only memory (CD-ROM), a magneto-optical disk (MOD), and/or a digital versatile disc (DVD) may also be used. Also, in the embodiments described herein, input channels include, without limitation, sensors and/or computer peripherals associated with an operator interface, such as a mouse and a keyboard. Further, in the exemplary embodiment, output channels may include, without limitation, a control device, an operator interface monitor and/or a display.

Processors described herein process information transmitted from a plurality of electrical and electronic devices that may include, without limitation, sensors, actuators, compressors, control systems, and/or monitoring devices. Such processors may be physically located in, for example, a control system, a sensor, a monitoring device, a desktop computer, a laptop computer, a programmable logic controller (PLC) cabinet, and/or a distributed control system (DCS) cabinet. RAM and storage devices store and transfer information and instructions to be executed by the processor(s). RAM and storage devices can also be used to store and provide temporary variables, static (i.e., non-changing) information and instructions, or other intermediate information to the processors during execution of instructions by the processor(s). Instructions that are executed may include, without limitation, wind turbine control system control commands. The execution of sequences of instructions is not limited to any specific combination of hardware circuitry and software instructions.

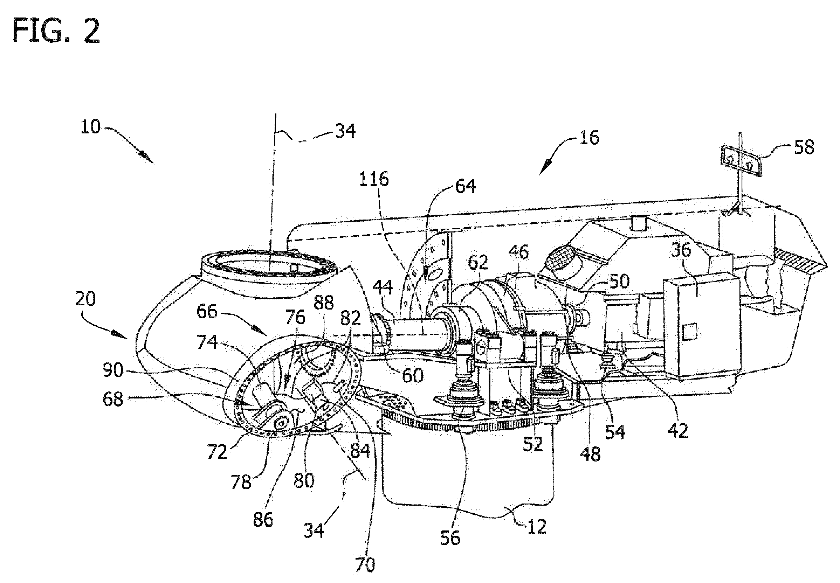

Figure 2 is an enlarged sectional view of a portion of wind turbine 10. In the exemplary embodiment, wind turbine 10 includes nacelle 16 and hub 20 that is rotatably coupled to nacelle 16. More specifically, hub 20 is rotatably coupled to an electric generator 42 positioned within nacelle 16 by rotor shaft 44 (sometimes referred to as either a main shaft or a low speed shaft), a gearbox 46, a high speed shaft 48, and a coupling 50. In the exemplary embodiment, rotor shaft 44 is disposed coaxial to rotational axis 92. Rotation of rotor shaft 44 rotatably drives gearbox 46 that subsequently drives high speed shaft 48. High speed shaft 48 rotatably drives generator 42 with coupling 50 and rotation of high speed shaft 48 facilitates production of electrical power by generator 42. Gearbox 46 and generator 42 are supported by a support 52 and a support 54. In the exemplary embodiment, gearbox 46 utilizes a dual path geometry to drive high speed shaft 48. Alternatively, rotor shaft 44 is coupled directly to generator 42 with coupling 50.

Nacelle 16 also includes a yaw drive mechanism 56 that may be used to rotate nacelle 16 and hub 20 on yaw axis 38 (shown in Figure 1) to control the perspective of rotor blades 22 with respect to direction 28 of the wind. Nacelle 16 also includes at least one meteorological mast 58 that includes a wind vane and anemometer (neither shown in Figure 2). Mast 58 provides information to control system 36 that may include wind direction and/or wind speed. In the exemplary embodiment, nacelle 16 also includes a main forward support bearing 60 and a main aft support bearing 62.

Forward support bearing 60 and aft support bearing 62 facilitate radial support and alignment of rotor shaft 44. Forward support bearing 60 is coupled to rotor shaft 44 near hub 20. Aft support bearing 62 is positioned on rotor shaft 44 near gearbox 46 and/or generator 42. Alternatively, nacelle 16 includes any number of support bearings that enable wind turbine 10 to function as disclosed herein. Rotor shaft 44, generator 42, gearbox 46, high speed shaft 48, coupling 50, and any associated fastening, support, and/or securing device including, but not limited to, support 52 and/or support 54, and forward support bearing 60 and aft support bearing 62, are sometimes referred to as a drive train 64.

In the exemplary embodiment, hub 20 includes a pitch assembly 66. Pitch assembly 66 includes one or more pitch drive systems 68 and at least one sensor 70. Each pitch drive system 68 is coupled to a respective rotor blade 22 (shown in Figure 1) for modulating the blade pitch of associated rotor blade 22 along pitch axis 34. Only one of three pitch drive systems 68 is shown in Figure 2.

In the exemplary embodiment, pitch assembly 66 includes at least one pitch bearing 72 coupled to hub 20 and to respective rotor blade 22 (shown in Figure 1) for rotating respective rotor blade 22 about pitch axis 34. Pitch drive system 68 includes a pitch drive motor 74, pitch drive gearbox 76, and pitch drive pinion 78. Pitch drive motor 74 is coupled to pitch drive gearbox 76 such that pitch drive motor 74 imparts mechanical force to pitch drive gearbox 76. Pitch drive gearbox 76 is coupled to pitch drive pinion 78 such that pitch drive pinion 78 is rotated by pitch drive gearbox 76. Pitch bearing 72 is coupled to pitch drive pinion 78 such that the rotation of pitch drive pinion 78 causes rotation of pitch bearing 72. More specifically, in the exemplary embodiment, pitch drive pinion 78 is coupled to pitch bearing 72 such that rotation of pitch drive gearbox 76 rotates pitch bearing 72 and rotor blade 22 about pitch axis 34 to change the blade pitch of blade 22.

Pitch drive system 68 is coupled to control system 36 for adjusting the blade pitch of rotor blade 22 upon receipt of one or more signals from control system 36. In the exemplary embodiment, pitch drive motor 74 is any suitable motor driven by electrical power and/or a hydraulic system that enables pitch assembly 66 to function as described herein. Alternatively, pitch assembly 66 may include any suitable structure, configuration, arrangement, and/or components such as, but not limited to, hydraulic cylinders, springs, and/or servo-mechanisms. Moreover, pitch assembly 66 may be driven by any suitable means such as, but not limited to, hydraulic fluid, and/or mechanical power, such as, but not limited to, induced spring forces and/or electromagnetic forces. In certain embodiments, pitch drive motor 74 is driven by energy extracted from a rotational inertia of hub 20 and/or a stored energy source (not shown) that supplies energy to components of wind turbine 10.

Pitch assembly 66 also includes one or more overspeed control systems 80 for controlling pitch drive system 68 during rotor overspeed. In the exemplary embodiment, pitch assembly 66 includes at least one overspeed control system 80 communicatively coupled to respective pitch drive system 68 for controlling pitch drive system 68 independently of control system 36. In one embodiment, pitch assembly 66 includes a plurality of overspeed control systems 80 that are each communicatively coupled to respective pitch drive system 68 to operate respective pitch drive system 68 independently of control system 36. Overspeed control system 80 is also communicatively coupled to sensor 70. In the exemplary embodiment, overspeed control system 80 is coupled to pitch drive system 68 and to sensor 70 with a plurality of cables 82. Alternatively, overspeed control system 80 is communicatively coupled to pitch drive system 68 and to sensor 70 using any suitable wired and/or wireless communications device. During normal operation of wind turbine 10, control system 36 controls pitch drive system 68 to adjust a pitch of rotor blade 22. In one embodiment, when rotor 18 operates at rotor overspeed, overspeed control system 80 overrides control system 36, such that control system 36 no longer controls pitch drive system 68 and overspeed control system 80 controls pitch drive system 68 to move rotor blade 22 to a feathered position to slow a rotation of rotor 18.

A power generator 84 is coupled to sensor 70, overspeed control system 80, and pitch drive system 68 to provide a source of power to pitch assembly 66. In the exemplary embodiment, power generator 84 provides a continuing source of power to pitch assembly 66 during operation of wind turbine 10. In an alternative embodiment, power generator 84 provides power to pitch assembly 66 during an electrical power loss event turbine 10. The electrical power loss event may include power grid loss, malfunctioning of the turbine electrical system, and/or failure of the wind turbine control system 36. During the electrical power loss event, power generator 84 operates to provide electrical power to pitch assembly 66 such that pitch assembly 66 can operate during the electrical power loss event.

In the exemplary embodiment, pitch drive system 68, sensor 70, overspeed control system 80, cables 82, and power generator 84 are each positioned in a cavity 86 defined by an inner surface 88 of hub 20. In a particular embodiment, pitch drive system 68, sensor 70, overspeed control system 80, cables 82, and/or power generator 84 are coupled, directly or indirectly, to inner surface 88. In an alternative embodiment, pitch drive system 68, sensor 70, overspeed control system 80, cables 82, and power generator 84 are positioned with respect to an outer surface 90 of hub 20 and may be coupled, directly or indirectly, to outer surface 90.

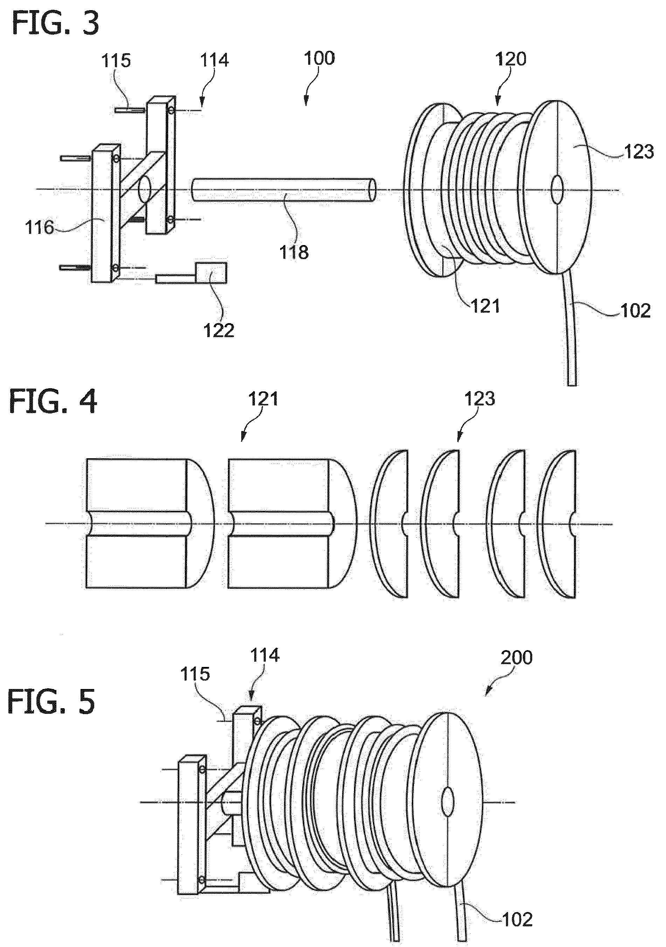

In the exemplary embodiment, the tower 12 of the wind turbine 10 comprises a tower segment 104 having a system 100 for installing an electric cable 102 into said tower 12. The system 100 comprises a cable drum 120 adapted for a use in said system 100. This is explained in more detail with regard to Fig. 3.

The system 100 shown Fig. 3 comprises the cable drum 120 and the drum support 114 for rotatably supporting the cable drum 120. The cable drum 120 is adapted to be carried by the drum support 114 and is further designed for carrying and controlled releasing of at least one electric cable 102 for the wind turbine 10. For example, controlled release of cable 102 from cable drum 120 includes controlling a speed of unwinding. Additionally or alternatively, controlled release of cable 102 may also include controlling a direction in which the cable 102 is released. The system 100 is further adapted for being mounted within an interior of the segment of the wind turbine tower.

According to a non-limiting embodiment, the drum support 114 comprises releasable connectors 115 for mounting the drum support 114 to an inner surface 112 of a lateral wall 110 of the segment 104. According to an alternative or additional embodiment the releasable connectors 115 are adapted to be attached to a receptacle 130 located on an inner surface 112 of the wall 110 of the segment 104.

According to the embodiment in Fig. 3 the drum support 114 of the system 100 is formed by an attachment device 116 and an axle 118 which rotatably carries the cable drum 120. Alternatively, an axle can be rotatably held by the attachment device 116 and can rotate together with the cable drum 120. Hence, the system 100 allows directly or indirectly mounting the cable drum 100 to the segment 104.

According to a further embodiment, - as it is exemplary shown in the exploded views in Figs. 3 and 4 - the system 100 itself can be disassembled in at least two separate components.

Hence it is possible to easily transport the single components through an opening 126 in a platform 124 down the tower 12 of the wind turbine to the ground when the installation of cables 102 is complete.

According to the present example the system 100 can be disassembled into a plurality of sub-components - drum support 114, attachment device 116 and cable drum 120. Those components can be brought down through the interior of the tower 12. Typically, the said sub-components have an appropriate size in order to fit through an opening 126 of the platform 124 in the tower segment 104. For example, these sub-components can be winched down.

According to a further embodiment, the cable drum 120 can be disassembled into six parts, two half parts of the drum body 121 and four half parts of the drum boundary 123.

According to an embodiment, said cable 102 has at least a weight of more than 100 kilograms and a length of more than 60 meters. According to an embodiment the cable has a length of more than 500 m and according to another embodiment more than 1000 m.

According to the embodiment shown in Fig. 5, a system 200 for installing a cable 102 into a segment 104 of a tower 12 of the wind turbine 10 comprises a plurality of cable drums 202. Thus, the system 200 may carry a plurality of different electric cables 102 which are installed for connecting electrical components of the nacelle 16 to further electric components at the bottom area of the wind turbine tower 12. According to a non-limiting example, such cables may connect a stator and a rotor of the electric generator 42 to an inverter system or transformer arranged in the bottom part of the tower.

According to an embodiment the cables may be of the same type or of different types. By this measure the installation process is rendered more efficient since parallel cables 102 can be unwound at the same time. Alternatively or additionally, the system 100 for installing a cable may comprise a plurality of cables 102 which may be unwound in parallel or sequentially. The sequence of unwinding cables 102 is adapted to the type, length and quantity of cables to be installed into the tower.

According to an embodiment (not shown), each cable drum 202 is supported independently by the system 200 such that it may rotate independently of other cable drums. In case different types of cables are installed, the installation process is rendered more efficient.

According to an embodiment, such multiple cable drums 125 comprise a plurality of drum bodies 121 and drum boundaries 125.

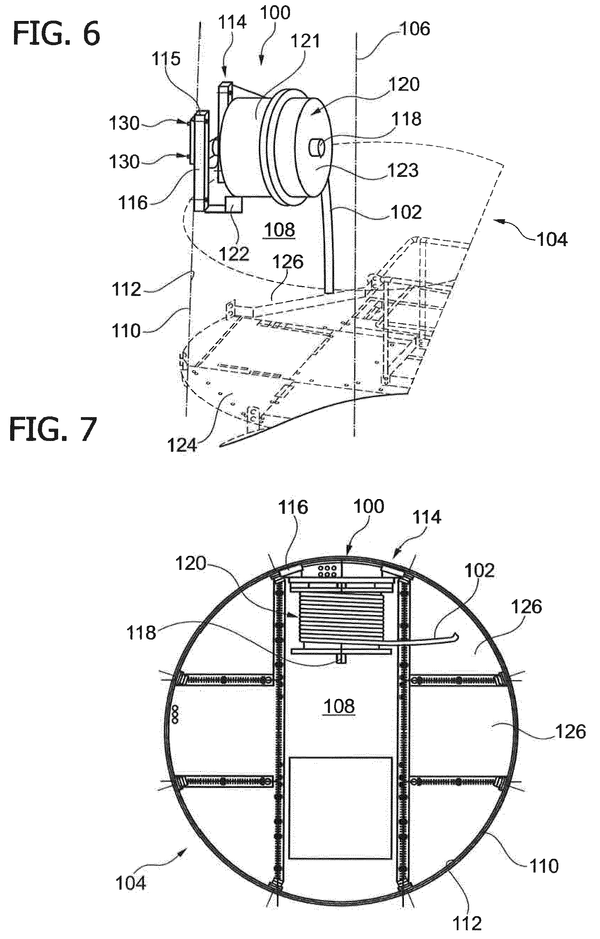

Fig. 6 shows a three dimensional view into an interior of the segment 104 of the tower 12, wherein Fig. 7 represents a sectional view through the tower segment 104 showing a view from above onto a platform 124 of the tower segment 104. The following description refers to both, Fig. 6 and 7.

The segment shown in Figs. 6 and 7 has a tubular wall 110 which can be made of steel. The wall 110 stretches mostly circular along a longitudinal axis 106 which can be aligned or substantially parallel to the yaw axis 38. In Fig. 6 the wall 110 is shown schematically only, in order to allow a focus in the interior 108 of the segment 104 of the tower 12. Alternatively or additionally, the wall of a segment may be made from any other suitable material in a tubular or non-tubular style or a segment can be formed from concrete or assembled from a plurality of concrete rings or ring segments.

Platform 124 is arranged within the interior 108 of the segment 104 to enable installation and maintenance staff to access an upper part of the tower segment 104 and to facilitate the assembly of components. Said platform 124 can be arranged perpendicular to the longitudinal axis 106. According to the present example, the platform 124 in the upper part of the segment 104 is facing an area of the tower 12 in which a gear rim 128 of a yaw bearing system is mounted to a top flange of the tower segment 104 of the tower 12. In this context, the upper part of the tower segment 104 is an area mostly distanced from the foundation support system 14 of the erected tower 12. Additionally or alternatively, the platform 124 can be arranged in any part of the segment 104 of the tower 12.

Within the interior 108 of the tower 12 the system 100 for installing an electrical cable 102 is detachably mounted to an inner surface 112 of the wall 110. According to an alternative embodiment, the system 100 may be attached to any structure in the interior 108 of the tower segment 104. The attachment is done in such, that the weight of the system 100 device is be transmitted into the segment 104. A mounting location in the interior 108 is adapted to be suitably for carrying the mass of the system 100 and transmitting related forces into the structure of the tower segment 104.

According to another embodiment, the system 100 is mounted to the segment 104 such that the entire cable drum 120 is fully arranged within the interior of the segment 104. Thus, the system 100 comprising the drum support 114 and the cable drum 120 can be preassembled in the tower segment 104 before the tower 12 itself is erected. Hence, cables 102 for electrically connecting the nacelle 16 or components therein to ground equipment are already provided within the tower segment 104 in a wound-in form. Therefore, the entire tower 12 may be erected, the nacelle 16 may be placed onto the tower 12 and cabling is not required to be brought up towards the nacelle 16.

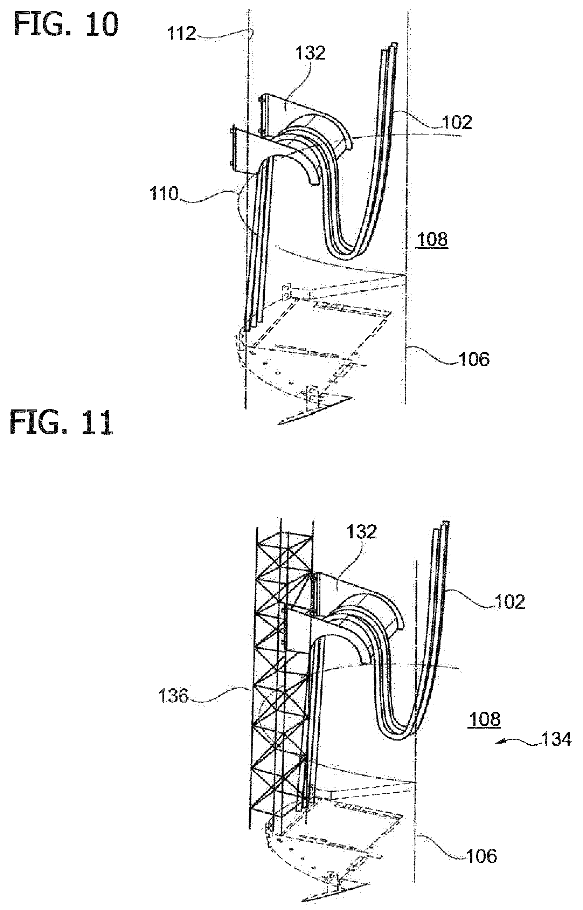

Another embodiment is presented in Fig. 10 in connection to Fig. 6 and 7. The exemplary segment 104 comprises a receptacle 130 on a radially inner surface 112 of the lateral wall 110. During normal operation of the wind turbine 10 - hence, after erection and commissioning - the receptacle 130 carries a cable saddle 132 for supporting electrical cables 102 in a transition area between a nacelle 16 and the tower segment 104. Between the basic support 14 of the tower 12 and the cable saddle 132 said cables 102 are fixed with respect to the wall 110. Due to the fact that the nacelle 16 is rotating during operation with respect to the tower 12, cables 102 between nacelle 16 and cable saddle 132 become twisted according to nacelle's 16 rotation. For that reason a cable section of the electrical cables 102 between the nacelle 16 and the cable saddle 132 hangs freely and some twisting of the cables 102 is allowed.

The drum support 114 of the system 100 for installing an electrical cable 102 in a tower segment 104 is designed to fit to the receptacle 130. Hence, no separate mounting arrangement for fixing the system to the tower segment 104 needs to be provided. This speeds up the preassembling process and - due to an increased homogeneity of the segment structure - it supports the structural integrity of the tower segment 104.

According to an alternative embodiment (not shown) a segment comprises another type of receptacle for mounting or attaching further components to the segment. The system for installing an electric cable may be mounted to such other type of receptacle.

According to a further embodiment (not shown), a longitudinal ladder is mounted to the inner surface 112 of the lateral wall 110 of the tower segment 104. Further, the tower segment 104 comprises fixation means for fixing the cable 102 with respect to the tower segment 104, wherein the fixation means are mounted in vicinity of the ladder such that installation personal may to access the fixation means from the ladder for mounting the cable 102. Thus, the installation personal may easily fix the cables with respect to the tower without climbing off the ladder. This results in a more cost effective and less time-consuming installation process.

According to an embodiment of erecting the tower 12 of the wind turbine 10, a bottom segment is mounted onto the foundation support system 14 and a further segment or further segments are put and fixed on top of each other. The most upper tower segment 104 comprises the system 100 for installing a cable 102 in tower 12. The system 100 can be mounted to the inner surface 112 of the wall 110 in near platform 124 such that personal is able to reach it when standing on the platform 124.

For installing a cable 102 in the assembled tower 12, the cable 102 is released from the cable drum 120 by unwinding it from the cable drum 120 manually. Alternatively or additionally, the system may include an active drive for unwinding the cable. Subsequently, the cable 102 is lowered through an opening 126 or gap in the platform until the lower end of the cable 102 reaches its intended location. Subsequently, the cable 102 is directly or indirectly fixed by special fixation means to the tower segment 104.

This step of the method for installing a cable 102 in a tower 12 of wind turbine 10 is repeated until all electrical cables 102 are installed in the tower 12. This method comes with the benefit that one continuous cable 102 without intermediate connection can be easily installed into the tower 12, wherein connection means for connecting the cable segments are not required any longer. A continuous electrical cable 102 is less prone to failure, which leads to an increased reliability of the whole wind turbine 10.

Furthermore, installation time is shortened drastically: before erecting the tower 12 from tower segments 104 the system 100 for installing the cable 102 is preassembled into the upper tower segment 104 and equipped with the very cable 102. Thus, when erecting the tower 12 the system 100 for installing the cable 102 is lifted to the top of the tower 12, already mounted in the upper tower segment 104. When the tower 102 is erected, the cable 102 is easily released top-down along the length of the entire tower 12 by simply unwinding the cable drum 120 and utilizing gravity. This method requires less components and working steps as if the cable 102 was carefully pulled up through the tower or was being assembled from various cable segments.

According to an additional embodiment, the step of releasing the cable 102 from the cable drum 120 does not require electrical energy, e.g. for operating an electric drive. During the installation process, the cable drum 120 can be rotated and controlled by installation staff being present on the platform 124 near by the cable drum 120. Thus, it is not required to install a supply of electrical energy into the tower 12 in order to drive an interims installation device like a winch or electrical drive. Thus, the installation process is rendered less complex and less prone to errors.

According to the embodiment in Fig. 3, 6 and Fig. 7 a locking device 122 is provided which acts between the drum support 114 and the cable drum 120 for preventing an undesired rotation of the cable drum 120. Additionally, the locking device 122 can be configured in such that it acts as brake for the cable drum 120. By this, the speed of rotation of the cable drum 120 can be controlled when the cable 102 is released down from the platform 124 towards the bottom. However, according to an alternative embodiment, the locking device or brake may be omitted. This is beneficial and applicable if the cable drum 120 allows a manual, controlled unwinding and holding.

According to an additional embodiment, the cable 102 is cut from the cable drum 120 when being successfully released and fixed with respect to the tower segment 104. This is particularly applicable, if a plurality of cables 102 of the same type is to be installed in the tower 12. In this case, the cable drum 120 comprises one continuous cable 102 being sufficiently long. After cutting the cable 102 the cable 102 is further unwound from the cable drum 120 and released downwards through openings 126 in the platform 124 in the tower segment 104 of the tower 12.

Alternatively or additionally, after the unwinding cable 102 from cable drum 120 is completed, the system 100 is dismounted off the tower segment 104 and disassembled into at least two separate components. As shown in the non-limiting example according to Fig. 3, the drum support 114 may be disassembled in axle 118 and attachment device 116.

According to an additional or alternative embodiment shown in Fig. 5, the cable drum 120 may be disassembled accordingly in smaller components such as half parts of the drum body 121 and half parts of the drum boundaries 123.

According to the present example, the system 100 is disassembled in components which have a size for fitting through an opening 126 within the platform 124.

According to a further embodiment, the disassembled components of the system 100 are lowered down from the tower 12. For that purpose a winch or an adapted rope can be used. No external crane is required to dismount the system 100 from the tower 12.

According to an additional embodiment, after dismounting the system 100 from the receptacle 130 the cable saddle 132 is mounted to said receptacle 130 on the wall 110 of the tower segment 104.

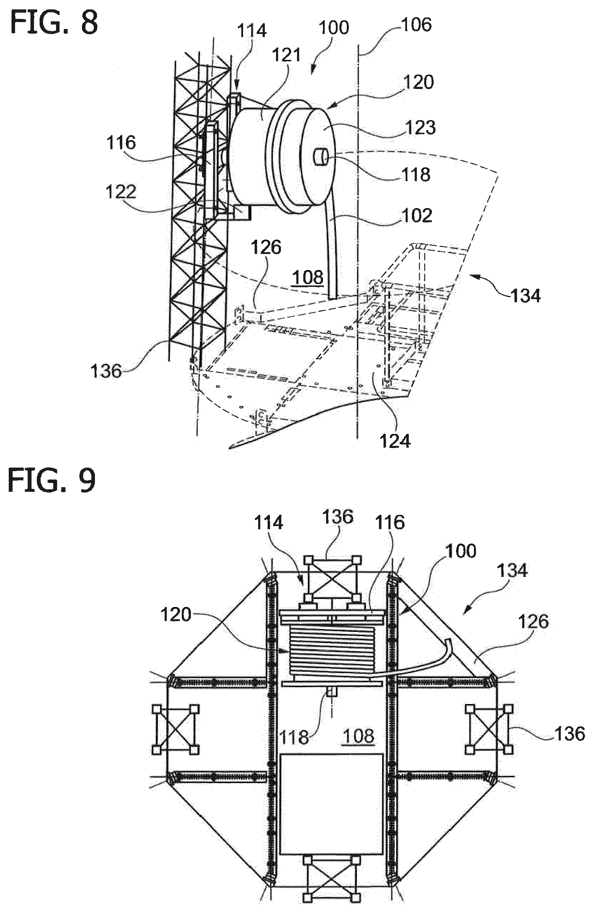

Another embodiment is disclosed in Figs. 8, 9 and 11, wherein a tower of a wind turbine is of the lattice tower type. Therefore the tower segment 134 is formed by a plurality of lattice beams 136. Typically, the lattice beams 136 are built on site and subsequently assembled to form a lattice segment 134. Such lattice segments 134 are then mounted on top on each other to form the tower.

The exemplary lattice segment 134 defines an interior 140 which is the space defined by the lattice beams 136. Typically, but not limited to, four lattice beams 136 define the interior 140 of the lattice segment 134. The lattice segment 134 carries a platform 138 similar to the tower segment 104 mentioned above.

One or a combination of the embodiments mentioned above may be applied to the embodiment shown in Figs. 8 and 9. Like components in Figs. 8 and 9 have the same reference numerals as in Figs. 6 and 7.

Exemplary embodiments of systems and methods for installing a cable in a tower of the wind turbine are described above in detail. The systems and methods are not limited to the specific embodiments described herein, but rather, components of the systems and/or steps of the methods may be utilized independently and separately from other components and/or steps described herein. For example a system for installing a cable in the tower and the related method thereto are not limited to practice with only the wind turbine systems as described herein. Rather, the exemplary embodiment can be implemented and utilized in connection with many other tower applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system for installing an electric cable in a tower of a wind turbine, comprising:
   at least one cable drum designed for carrying and controlled releasing of at least one electric cable for a wind turbine;
   a drum support for rotatably supporting said at least one cable drum, wherein the drum support is configured to be within an interior of a segment of the tower.
2. The system according to clause 1, wherein the drum support is designed to be mounted to an inner surface of a lateral wall or to a support beam of the segment
3. The system according to any preceding clause, further comprising at least one releasable connector for mounting the drum support to an inner surface of a lateral wall or to a support beam of the segment.
4. The system according to any preceding clause, wherein the drum support comprises an axle and an attachment device, wherein the cable drum is rotatably supported to the axle.
5. The system according to any preceding clause, being configured that the cable drum, axle and attachment device can be disassembled.
6. The system according to any preceding clause, wherein the axle is fixed to the attachment device and the cable roll is rotatably supported by the axle or the axle is rotatably held by the attachment device and the cable roll is fixed to the axle.
7. The system according to any preceding clause, comprising a locking device for preventing an undesired rotation of the cable drum or a locking device which is configured as a brake.
8. The system according to any preceding clause, wherein the cable drum comprises at least one electric cable for a wind turbine having a weight of more than 100 kilograms and a length of more than 60 meters, and the cable drum is designed for carrying and controlled releasing of said cable.
9. The system according to any preceding clause, wherein the cable drum comprises at least two different types of cables wherein the cables are wound in in a serial and/or parallel manner.
10. A segment for a tower of a wind turbine comprising:
   a longitudinal axis;
   a lateral wall surrounding the axis and or a plurality of support beams arranged partially parallel to the axis;
   a platform mounted therein between mainly perpendicular to the longitudinal axis for receiving wind turbine related personal and equipment; and
   a system for installing an electric cable in the tower of a wind turbine comprising
   at least one cable drum designed for carrying and controlled releasing of at least one electric cable for a wind turbine and
   a drum support for rotatably supporting said at least one cable drum, wherein the drum support is mounted within an interior of the segment.
11. The segment according to any preceding clause, wherein the drum support is mounted to the segment in such that the entire cable drum is fully arranged within the interior of the segment.
12. The segment according to any preceding clause, comprising a receptacle on an radially inner surface of the lateral wall or on one of the support beams, wherein the receptacle is designed to carry a cable saddle for supporting electrical cables between a nacelle and the tower during normal operation of the wind turbine, and
   the system for installing an electrical cable is mounted to the receptacle.
13. The segment according to any preceding clause, comprising:
   a longitudinal ladder mounted to the inner surface of the lateral wall or to any of the support beams of the segment;
   fixation means for fixing in respect to the segment a plurality of cables to the fixation means, wherein the fixation means are mounted in such suitable vicinity of the ladder that installation personal when present on the ladder is able to access these fixation means for mounting the cable thereto.
14. A method for installing an electric cable to a tower of a wind turbine, wherein the tower comprises at least one tower segment having a longitudinal axis, a lateral wall surrounding the axis and or a plurality of support beams arranged partially parallel to the axis, a platform mounted thereinbetween mainly perpendicular to the longitudinal axis for receiving wind turbine related personal and equipment, the method comprising the following steps:
   a. providing a system for installing the electrical cable within an interior of the at least one tower segment;
   b. mounting a drum support for rotatably supporting at least one cable drum to the interior of the at least one tower segment;
   c. mounting at least one cable drum carrying at least one electric cable for a wind turbine to the drum support;
   d. erecting the tower including lifting the at least one tower segment;
   e. unwinding the electric cable essentially parallel to the longitudinal axis through an opening in or near the platform;
   f. fixing the cable in respect to the segment;
   g. optionally repeating steps e) to f).
15. Method according to any preceding clause, comprising the step: cutting the cable after step e) or f).
16. Method according to any preceding clause, comprising the step: disassembling the system into at least two separate components.
17. Method according to any preceding clause, comprising the step: disassembling the cable role into at least two separate components.
18. Method according to any preceding clause, comprising the step: lowering the components down from the platform.
19. Method according to any preceding clause, comprising the step: mounting a cable saddle for supporting electrical cables between a nacelle and the tower during normal operation of the wind turbine to the inner wall of the segment.
20. Method according to any preceding clause, wherein no electrical power is required and only mechanical energy is used.

## Claims

1. A system (100) for installing an electric cable (102) in a tower (12) of a wind turbine (10), comprising:
at least one cable drum (120) designed for carrying and controlled releasing of at least one electric cable (102) for a wind turbine (10);
a drum support (114) for rotatably supporting said at least one cable drum (120), wherein the drum support (114) is configured to be mounted within an interior of a segment (104) of the tower (12).

2. The system (100) according to claim 1 further comprising at least one releasable connector (115) for mounting the drum support (114) to an inner surface of a lateral wall or to a support beam of the segment (104).

3. The system (100) according to claim 1 or 2, wherein the drum support (114) comprises an axle (118) and an attachment device (116), wherein the cable drum (120) is rotatably supported to the axle (118).

4. The system (100) according to claim 3, wherein the axle (118) is fixed to the attachment device (116) and the cable roll is rotatably supported by the axle or the axle is rotatably held by the attachment device and the cable roll is fixed to the axle.

5. The system (100) according to any of the preceding claims being configured that the cable drum (120), axle (118) and/or attachment device (116) can be disassembled.

6. The system (100) according to any of the preceding claims comprising a locking device (122) for preventing an undesired rotation of the cable drum (120) or a locking device which is configured as a brake.

7. The system (100) according to any of the preceding claims, wherein the cable drum (120) comprises at least one electric cable (102) for a wind turbine having a weight of more than 100 kilograms and a length of more than 60 meters, and the cable drum (120) is designed for carrying and controlled releasing of said cable (102).

8. The system (100) according to any of the preceding claims, wherein the cable drum (120) comprises at least two different types of electrical cables wherein the cables are wound in in a serial and/or parallel manner.

9. A segment (104) for a tower (12) of a wind turbine (10) comprising:
a longitudinal axis (106);
a lateral wall (110) surrounding the axis and or a plurality of support beams arranged partially parallel to the axis;
a platform (124) mounted therein between mainly perpendicular to the longitudinal axis for receiving wind turbine related personal and equipment;
a system (100) according to any of the claims 1 to 8, wherein the drum support is mounted within an interior of the segment.

10. The segment (104) according to claim 9, wherein the drum support (114) is mounted to the segment in such that the entire cable drum is fully arranged within the interior of the segment.

11. The segment (104) according to claim 9 or 10 comprising a receptacle (130) on an radially inner surface of the lateral wall or of any of the support beams, wherein this receptacle is designed to carry an electrical cable saddle (132) for supporting cables (102) between a nacelle and the tower during normal operation of the wind turbine, and wherein the system (100) according to any of the claims 1 to 8 is mounted to the receptacle.

12. A method for installing an electric cable to (102) a tower (12) of a wind turbine (10), the method comprising the following steps:
a. erecting the tower (12) comprising a tower segment (104) according to any of the claims 9 to 11;
b. unwinding the cable (102) essentially parallel to the longitudinal axis through an opening in the platform;
c. fixing the cable (102) in respect to the segment (104);
d. optionally, repeating steps b) to c).

13. The method according to claim 12, after unwinding and fixing the cable (102), comprising the step:
a. disassembling a system (100) for installing a cable (102) according to any of the claims 1 to 8 into at least two separate components, and/or
b. disassembling the cable role into at least two separate components.

14. The method according to claim 12 or 13 comprising the step: lowering the components down from the platform (124).

15. The method according to any one of the claims 12 to 14 comprising the step: mounting a cable saddle (132) for supporting cables (102) between a nacelle (16) and the tower (12) during normal operation of the wind turbine (10) to the inner wall of the segment (104).
